# EUROPÄISCHE PATENTSCHRIFT

(11) **EP 2 506 500 B1**
(45) Veröffentlichungstag und Bekanntmachung des Hinweises auf die Patenterteilung: **05.07.2017**
(21) Anmeldenummer: 11009914.0
(22) Anmeldetag: 16.12.2011
(51) Int. Cl.: H04L 12/40, H04L 12/64, H04L 12/815, H04L 12/801, H04L 12/825, H04L 12/835

(54) **Verfahren zur synchronen Ansteuerung wenigstens eines untergeordneten Netzwerkteilnehmers durch eine übergeordnete Steuereinheit über ein asynchron arbeitendes Netzwerksegment**
Method for synchronous control of at least one subordinate network participant by one superordinate control unit through an asynchronous network segment
Procédé de commande synchrone d'au moins un utilisateur du réseau subordonné par une unité de commande supérieure via un segment de réseau à fonctionnement asynchrone

(30) Priorität: 29.03.2011 DE 102011015484
(43) Veröffentlichungstag der Anmeldung: 03.10.2012
(73) Patentinhaber: Robert Bosch GmbH, 70442 Stuttgart (DE)
(72) Erfinder: Wahler, Matthias, 97450 Muedesheim (DE); Selig, Andreas, 97816 Lohr-Sendelbach (DE); Kuehl, Holger, 97753 Karlstadt-Karlburg (DE)
(74) Vertreter: Thürer, Andreas

(56) Entgegenhaltungen:
- WO-A1-01/10087
- US-A1- 2005 053 053
- US-B1- 7 149 186

## Beschreibung

Die vorliegende Erfindung betrifft ein Verfahren zur synchronen Ansteuerung wenigstens eines untergeordneten Netzwerkteilnehmers durch eine übergeordnete Steuereinheit über ein asynchron arbeitendes Netzwerksegment.

### Stand der Technik

Die US 2005/053053 A1 beschreibt eine Vorrichtung für einen synchronisierten Transport von Daten durch ein asynchrones Medium.

Die US 2005/053053 A1 beschreibt ein System zum Steuern eines FIFOs.

In der Automatisierungstechnik werden unterschiedliche Netzwerkprotokolle, üblicherweise Feld- oder Motionbusse bzw. sog. "Industrial Ethernet", eingesetzt, um die einzelnen Komponenten, wie z.B. elektrische Steuerungen, Antriebsregler, E/A-Geräte usw., miteinander zu verbinden. Diese lassen sich in Netzwerkprotokolle mit synchroner (z.B. SERCOS 2, SERCOS III, EtherCAT oder Profinet IRT) und Netzwerkprotokolle mit asynchroner (z.B. Profmet RT, Ethernet/IP, Profibus) Datenübertragung gliedern.

Bei der synchronen Datenübertragung findet die Übertragung der einzelnen Datenpakete (sog. "Telegramme") getaktet, d.h. in regelmäßigen Abständen statt. Bei der asynchronen Datenübertragung findet die Übertragung der einzelnen Datenpakete zufällig statt. Die synchrone Datenübertragung wird üblicherweise zur Ansteuerung von Aktoren (wie beispielsweise interpolierenden Antrieben) verwendet, wenn diese eine vorbestimmte Aktion zu einer vorbestimmten Zeit durchführen müssen (z.B. bei Bearbeitungsmaschinen wie Werkzeugmaschinen, Druckmaschinen usw.). Hierbei wird in jedem Kommunikationstakt ein Sollwert an jeden Aktor übermittelt. Sollen mehrere Aktoren gemeinsam eine koordinierte Aktion ausführen, wie beispielsweise eine koordinierte mehrdimensionale Bewegung generieren, werden in jedem Kommunikationstakt die entsprechend zusammengehörigen Sollwerte kontextrichtig versandt, so dass die Aktoren ihre Aktion synchron ausführen können.

Die vorliegende Erfindung möchte nun die Möglichkeit schaffen, einen oder mehrere Aktoren von einer Steuereinheit synchron anzusteuern zu lassen, wenn diese über ein asynchron arbeitendes bzw. betriebenes Netzwerksegment angebunden ist. Dies ermöglicht insbesondere auch den Einsatz von koordiniert interpolierenden Achsen in vorhandenen, asynchronen Strukturen. Zur Interpolation von Aktoren ist es nämlich notwendig, dass die Aktoren im Interpolationsverbund zur selben Zeit die Sollwerte kontextrichtig verarbeiten, da es sonst zu einem Versatz zwischen den Aktoren kommt. Dies ist ohne weitere Maßnahmen bei einer asynchron bzw. nicht-taktsynchron arbeitenden bzw. betriebenen Verbindung nicht möglich, da nicht gewährleistet ist, dass allen Geräten zur Verarbeitungszeit die entsprechenden kontextrichtigen Sollwerte zur Verfügung stehen und dass alle Geräte die zusammengehörigen Sollwerte gleichzeitig verarbeiten.

### Offenbarung der Erfindung

Erfindungsgemäß wird ein Verfahren zur synchronen Ansteuerung von untergeordneten Netzwerkteilnehmern durch eine übergeordnete Steuereinheit über ein asynchron arbeitendes Netzwerksegment mit den Merkmalen des Anspruchs 1 vorgeschlagen. Vorteilhafte Ausgestaltungen sind Gegenstand der Unteransprüche sowie der nachfolgenden Beschreibung.

Im Rahmen der Erfindung ist ein Verbund von untergeordneten Netzwerkteilnehmern vorgesehen, die untereinander über ein taktsynchron arbeitendes bzw. betriebenes Netzwerksegment verbunden sind. Der Verbund ist mit einer übergeordneten Steuereinheit, die Ansteuerdaten (insbesondere die Sollwerte für die Aktoren) bereitstellt, jedoch über ein asynchron arbeitendes Netzwerksegment verbunden. Zwischen dem synchron und dem asynchron arbeitenden Netzwerksegment wird nun eine Zwischenspeichereinrichtung ("Puffer") für die Ansteuerdaten vorgesehen, die zur Entkopplung dient. Bei der Zwischenspeichereinrichtung handelt es sich mit anderen Worten um ein "store and forward"-System. Die Zwischenspeichereinrichtung ist vorzugsweise in einem entsprechend weitergebildeten untergeordneten Netzwerkteilnehmer vorgesehen, der dann auch die Funktion einer Übermittlereinheit ausfüllt.

Durch die erfindungsgemäße Lösung wird somit das asynchron arbeitende Netzwerksegment von der Steuereinheit zum Verbund dadurch "überbrückt", dass am Verbund ein Puffer vorgesehen wird, der die unregelmäßig eintreffenden Daten von der Steuereinheit sammelt, zwischenspeichert und ausgleicht. Die Weiterübertragung der Daten aus dem Puffer findet dann synchron (taktgebunden) statt.

Durch die erfindungsgemäße Lösung wird es möglich, auch mit einer asynchron angebundenen Steuereinheit Automatisierungssysteme zu steuern, die eine synchrone, d.h. getaktete, Übertragung erfordern, bspw. weil interpolierende Achsen enthalten sind. Bei den Netzwerkteilnehmern und der Steuereinheit handelt es sich im Rahmen eines Automatisierungssystems beispielsweise um Steuerungen (bspw. SPS), Antriebsregler und/oder synchron arbeitenden E/A-Geräte. Ein Interpolationsverbund von Achsen kann über ein asynchron arbeitendes Netzwerksegment angesteuert werden.

Vorzugsweise kann der Übertragungstakt (d.h. die Anzahl der Übertragungen pro Zeitspanne) der synchronen Datenübertragung in dem Verbund angepasst werden, um ein Leerlaufen oder Überlaufen des Puffers zu verhindern. Beispielsweise kann ein Schwellwertvergleich durchgeführt werden, wobei der Übertragungstakt erhöht wird, wenn der Füllstand des Puffers einen oberen Schwellwert überschreitet, und der Übertragungstakt verringert wird, wenn der Füllstand des Puffers einen unteren Schwellwert unterschreitet. Die Erhöhung und Verringerung kann bspw. auch abhängig von einem Verhältnis erfolgen, um das der Füllstand vom Schwellwert abweicht, d.h. je größer die Abweichung desto größer die Veränderung des Taktes.

Zweckmäßigerweise werden die Ansteuerdaten markiert, wenn sie in der Steuereinheit generiert werden. Eine solche Markierung umfasst insbesondere eine Reihenfolge. Da die Übertragung an den Puffer nämlich über das asynchron arbeitende Netzwerksegment stattfindet, ist nicht auszuschließen, dass einzelne Ansteuerdaten nicht, verspätet oder sogar in der falschen Reihenfolge den Puffer erreichen. Aufgrund der Markierung kann dann die richtige zeitliche Reihenfolge der Ansteuerdaten (z.B. Sollwerte) bei der Weiterübertragung aus dem Puffer beachtet werden. Ggf. fehlende Werte können durch geeignete Mechanismen wie Interpolation oder Extrapolation rekonstruiert werden. Die Reihenfolge kann besonders einfach mit einem Zähler gekennzeichnet werden. Die Markierung kann alternativ oder zusätzlich dazu dienen, die Sollwerte den beabsichtigten untergeordneten Netzwerkteilnehmern zuzuweisen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung
- Figur 1: zeigt schematisch eine bevorzugte Ausführungsform eines erfindungsgemäßen Automatisierungsnetzwerks.
- Figur 2: zeigt schematisch eine Datenübertragung über eine Zwischenspeichereinrichtung gemäß einer bevorzugten Ausführungsform der Erfindung.

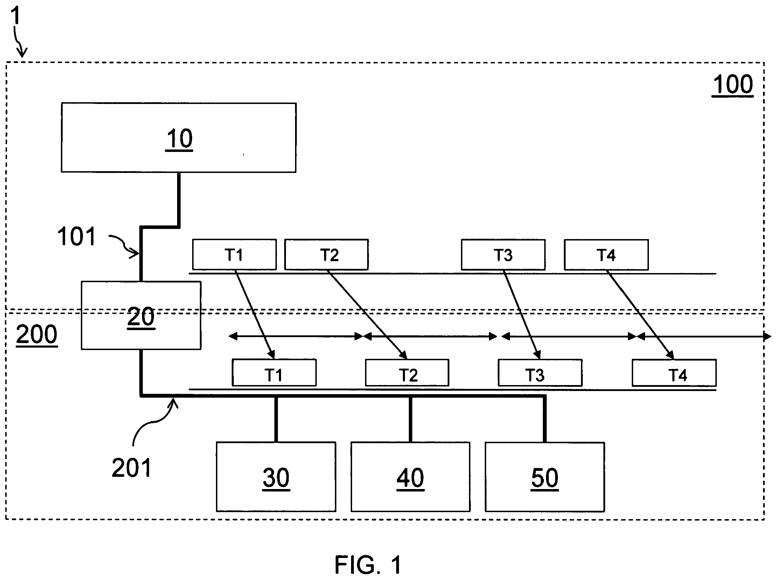

In Figur 1 ist eine bevorzugte Ausführungsform eines erfindungsgemäßen Automatisierungsnetzwerks schematisch dargestellt und insgesamt mit 1 bezeichnet. Das Automatisierungsnetzwerk 1 umfasst eine übergeordnete Steuereinheit 10 und eine Anzahl von untergeordneten Netzwerkteilnehmern 20, 30, 40, 50. Bei der übergeordneten Steuereinheit 10 kann es sich beispielsweise um eine elektrische Steuerung (SPS u.ä.) handeln. Bei den untergeordneten Netzwerkteilnehmern kann es sich um ebenfalls elektrische Steuerungen und/oder Antriebsregler und/oder E/A-Geräte handeln.

Das Automatisierungsnetzwerk 1 verfügt über einen Bereich 100 mit einem asynchron arbeitenden Netzwerkprotokoll, wie z. B. Profinet RT, und über einen Bereich 200 mit synchron arbeitendem Netzwerkprotokoll, wie z. B. Sercos III. Am Übergang von dem Bereich 100 zu dem Bereich 200 ist ein als Übermittlereinheit 20 ausgebildeter Netzwerkteilnehmer vorgesehen, der der Steuereinheit 10 untergeordnet, den übrigen Netzwerkteilnehmern 30, 40 und 50 jedoch übergeordnet ist. Die Übermittlereinheit 20 verfügt über eine Zwischenspeichereinrichtung 21 zur Aufnahme der von der Steuereinheit 10 ausgegebenen Ansteuerdaten. Die Netzwerksegmente selbst sind mit 101 bzw. 201 bezeichnet, die über die Netzwerksegmente übermittelten Datenpakete bzw. Telegramme mit T1 bis T4.

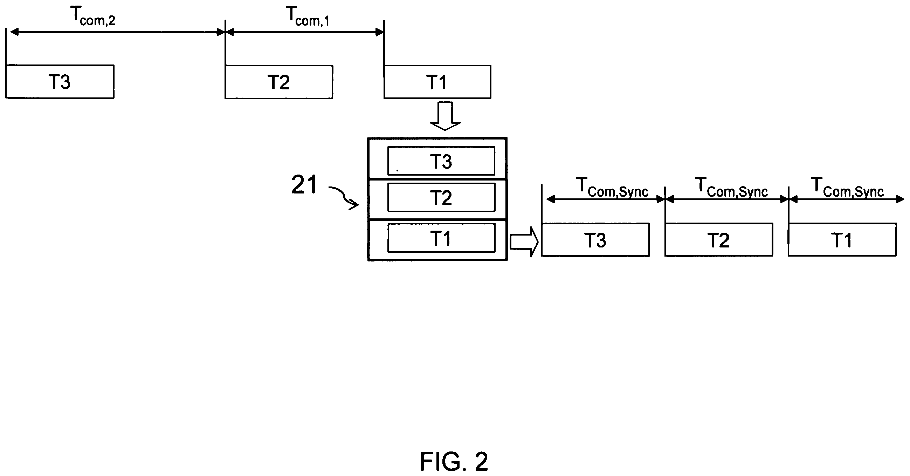

Der Ablauf der Kommunikation wird nachfolgend unter Bezugnahme auf Figur 2 näher erläutert.

Von der Steuereinheit 10 werden die Ansteuerdaten T1 bis T3 in asynchroner Weise, d.h. im Wesentlichen zufällig ausgegeben. In der Folge liegen zwischen den Übermittlungszeitpunkten der einzelnen Telegramme T1 bis T3 unterschiedliche Zeitabstände T_{com,1}, T_{com,2}. Diese unterschiedlichen Zeitabstände entsprechen nicht den Voraussetzungen für ein synchron arbeitendes Netzwerkprotokoll, d.h. sind nicht taktsynchron.

Um für die untergeordneten Netzwerkteilnehmer 20 bis 50 eine synchrone Ansteuerung bereitstellen zu können, ist die Zwischenspeichereinrichtung 21 vorgesehen, in der die Telegramme (Ansteuerdaten) T1 bis T3 zwischengespeichert werden.

Anschließend werden die Telegramme T1 bis T3 aus der Zwischenspeichereinrichtung 21 ausgelesen und in synchroner Weise an die untergeordneten Netzwerkteilnehmer 20 bis 50 übertragen. In der Folge besteht nun zwischen den Übermittlungszeitpunkten der Ansteuerdaten jeweils derselbe zeitliche Abstand T_{com,sync}. Die Übermittlereinheit verfügt über geeignete Taktmittel (nicht gezeigt), z.B. PLL, um die synchrone Datenübertragung bewerkstelligen zu können.

Die Übermittlereinheit 20 kann neben der Zwischenspeicher- und Übermittlungsfunktion auch die üblichen Funktionen eines untergeordneten Netzwerkteilnehmers, wie z.B. Antriebsregelung u.ä., ausführen. In diesem Fall würde die Übermittlereinheit 20 aus jedem der Telegramme T1 bis T3 bzw. T4 auch die für sie selbst bestimmten Ansteuerdaten verarbeiten.

Auf den Aufbau der Ansteuerdaten bzw. Telegramme selbst soll an dieser Stelle nicht näher eingegangen werden, da dies für den Fachmann offenkundig ist und im Wesentlichen lediglich von dem verwendeten asynchron bzw. synchron arbeitenden Netzwerkprotokoll abhängt.

Die Übermittlereinheit 20 verfügt vorzugsweise weiterhin über eine Füllstandsüberwachung (nicht gezeigt) für die Zwischenspeichereinrichtung 21. In vorteilhafter Ausgestaltung der Erfindung wird nun (durch Beeinflussung der Taktmittel) der Übertragungstakt in Abhängigkeit vom Füllstand angepasst, um ein Leer- und Überlaufen der Zwischenspeichereinrichtung zu verhindern. Insbesondere wird der Übertragungsakt erhöht, d.h. der zeitliche Abstand T_{com,sync} verringert, wenn die Zwischenspeichereinrichtung droht überzulaufen. Umgekehrt wird der Übertragungstakt verringert, d.h. der zeitliche Abstand T_{com,sync} erhöht, wenn die Zwischenspeichereinrichtung droht leerzulaufen. Die Entscheidung kann insbesondere anhand eines Schwellwertvergleichs erfolgen, wobei beispielsweise ein oberer Schwellwert vorgesehen wird, bei dessen Überschreiten ein Überlaufen droht, und ein unterer Schwellwert vorgesehen wird, bei dessen Unterschreiten ein Leerlaufen droht. Die Anpassung des Übertragungstaktes sollte sich zweckmäßigerweise im Rahmen der Spezifikationen der synchron arbeitenden Kommunikationsverbindung bewegen. Beispielsweise ist bei SERCOS III eine Abweichung von bis zu 100ppm erlaubt.

Weiter vorzugsweise kann vorgesehen sein, dass die Übermittlereinheit 20 und/oder die Netzwerkteilnehmer 30 bis 50 bei einem (ggf. trotz der Taktanpassung erfolgenden) Leer- oder Überlaufen der Zwischenspeichereinrichtung in vorbestimmter Weise reagieren, um den Betrieb des Automatisierungsnetzwerkes nicht zu gefährden.

Insbesondere ist nämlich eine Markierung für die Ansteuerdaten vorgesehen, welche die Reihenfolge der Ansteuerdaten anzeigt und zweckmäßigerweise von der Steuereinheit 10 vorgesehen wird. Bei einem Überlaufen der Zwischenspeichereinrichtung 21 werden keine neuen Ansteuerdaten angenommen, bis wieder freier Speicherplatz zur Verfügung steht. In der Folge würde sich eine Lücke in den Ansteuerdaten ergeben, welche jedoch aufgrund der Markierung von der Übermittlereinheit 20 erkannt würde. Dies entspricht im Wesentlichen auch der Situation, wenn Ansteuerdaten auf dem Weg von der Steuereinheit 10 zur Übermittlereinheit 20 verloren gehen. Um in einem solchen Fall den Betrieb des Automatisierungsnetzwerkes möglichst unbeeinflusst weiterzuführen, ist die Übermittlereinheit 20 zweckmäßigerweise dazu eingerichtet, fehlende Ansteuerdaten aus den vorhandenen Ansteuerdaten zu bestimmen, insbesondere zu interpolieren. Alternativ oder zusätzlich können auch die Netzwerkteilnehmer selbst dazu eingerichtet sein.

Bei einem Leerlaufen der Zwischenspeichereinrichtung 21 können zum nächsten Übermittlungszeitpunkt keine neuen Ansteuerdaten aus der Zwischenspeichereinrichtung 21 ausgelesen werden. Die Übermittlereinheit 20 kann dazu eingerichtet sein, in einem solchen Fall neue Ansteuerdaten aus den früheren Ansteuerdaten zu bestimmen, insbesondere zu extrapolieren. Alternativ oder zusätzlich können auch die Netzwerkteilnehmer dazu eingerichtet sein.

## Patentansprüche

1. Verfahren zur synchronen Ansteuerung von zumindest zwei Aktoren (30, 40, 50) zum gemeinsamen Ausführen einer koordinierten Aktion durch eine übergeordnete Steuereinheit (10) über ein asynchron arbeitendes Netzwerksegment (101), wobei die zumindest zwei Aktoren (30, 40, 50) und die übergeordnete Steuereinheit (10) von einem Automatisierungsnetzwerk (1) umfasst sind und wobei von der Steuereinheit (10) Ansteuerdaten (T1, T2, T3, T4), die Sollwerte für die Aktoren (30, 40, 50) umfassen, für die zumindest zwei Aktoren (30, 40, 50) ausgegeben werden, wobei die Ansteuerdaten (T1, T2, T3, T4) über das asynchron arbeitende Netzwerksegment (101) an wenigstens eine Übermittlereinheit (20) mit einer Zwischenspeichereinrichtung (21) übertragen und dort zwischengespeichert werden, wobei die Ansteuerdaten (T1, T2, T3, T4) aus der Zwischenspeichereinrichtung (21) ausgelesen und über ein synchron mit einem Übertragungstakt arbeitendes Netzwerksegment (201) an die zumindest zwei Aktoren (30, 40, 50) übertragen werden, **dadurch gekennzeichnet dass** der Übertragungstakt in Abhängigkeit von der Menge der in der Zwischenspeichereinrichtung (21) zwischengespeicherten Ansteuerdaten (T1, ..., T3) verändert wird, wobei die Aktoren (30, 40, 50), für das gemeinsame Ausführen einer koordinierten Aktion, zur selben Zeit die Sollwerte kontextrichtig verarbeiten, wodurch ein Versatz zwischen den Aktoren vermieden wird und die Aktoren ihre Aktion synchron ausführen.

2. Verfahren nach Anspruch 1, wobei der Übertragungstakt erhöht wird, wenn die Menge der in der Zwischenspeichereinrichtung (21) zwischengespeicherten Ansteuerdaten (T1, ..., T3) einen oberen Schwellwert überschreitet.

3. Verfahren nach Anspruch 1 oder 2, wobei der Übertragungstakt verringert wird, wenn die Menge der in der Zwischenspeichereinrichtung (21) zwischengespeicherten Ansteuerdaten (T1, ..., T3) einen unteren Schwellwert unterschreitet.

4. Verfahren nach einem der vorstehenden Ansprüche, wobei der Übertragungstakt proportional zu einer Abweichung der Menge der in der Zwischenspeichereinrichtung (21) zwischengespeicherten Ansteuerdaten (T1, ..., T3) von dem Schwellwert verändert wird.

5. Verfahren nach einem der vorstehenden Ansprüche, wobei die Ansteuerdaten markiert werden, bevor sie an die Zwischenspeichereinrichtung (21) übertragen werden, wobei die Markierung eine Reihenfolge der Ansteuerdaten kennzeichnet.

6. Verfahren nach einem der vorstehenden Ansprüche, wobei fehlende Ansteuerdaten aus vorhandenen Ansteuerdaten bestimmt werden, insbesondere extra- oder interpoliert werden.

7. Automatisierungsnetzwerk (1) umfassend
einen Verbund (200) aus wenigstens zwei untergeordneten Netzwerkteilnehmern (20, 10, 30, 40, 50), die untereinander durch ein synchron arbeitendes Netzwerksegment (201) verbunden sind, wobei der Verbund (200) wenigstens eine Übermittlereinheit (20) mit einer Zwischenspeichereinrichtung (2) und zumindest zwei Aktoren (30, 40, 50) zum gemeinsamen Ausführen einer koordinierten Aktion umfasst,
wenigstens eine übergeordnete Steuereinheit (10), die mit der Übermittlereinheit (20) durch ein asynchron arbeitendes Netzwerksegment (101) verbunden ist und Ansteuerdaten (T1,..., T3) bereitstellt, die Sollwerte für die Aktoren (30, 40, 50) umfassen, **dadurch gekennzeichnet dass** die Übermittlereinheit (20) mit dem synchron arbeitenden Netzwerksegment (201) und mit dem asynchron arbeitenden Netzwerksegment (101) verbunden und dazu eingerichtet ist, die Ansteuerdaten (T1, ..., T3) für die Aktoren (30, 40, 50) über das asynchron arbeitende Netzwerksegment (101) zu empfangen, in der Zwischenspeichereinrichtung (21) zwischenzuspeichern, die in der Zwischenspeichereinrichtung (21) zwischengespeicherten Ansteuerdaten (T1, ..., T3) auszulesen, in synchroner Weise über das synchron mit einem Übertragungstakt arbeitenden Netzwerksegment (201) an die Aktoren (30, 40, 50) zu übertragen, und den Übertragungstakt in Abhängigkeit von der Menge der in der Zwischenspeichereinrichtung (21) zwischengespeicherten Ansteuerdaten (T1, ..., T3) zu verändern, und
wobei die Aktoren (30, 40, 50) eingerichtet sind, für das gemeinsame Ausführen einer koordinierten Aktion, zur selben Zeit die Sollwerte kontextrichtig zu verarbeiten, wodurch ein Versatz zwischen den Aktoren vermieden wird und die Aktoren ihre Aktion synchron ausführen.

8. Automatisierungsnetzwerk nach Anspruch 7, wobei die übergeordnete Steuereinheit (10) und/oder die untergeordneten Netzwerkteilnehmer (20, 30, 40, 50) als elektrische Steuerungen, SPS, Antriebsregler und/oder E/A-Geräte ausgebildet sind.

## Claims

1. Method for synchronously controlling at least two actuators (30, 40, 50) to jointly perform a coordinated action by means of a superordinate control unit (10) via an asynchronously operating network segment (101), the at least two actuators (30, 40, 50) and the superordinate control unit (10) being included in an automation network (1), and the control unit (10) outputting control data (T1, T2, T3, T4), which comprise desired values for the actuators (30, 40, 50), for the at least two actuators (30, 40, 50), the control data (T1, T2, T3, T4) being transmitted, via the asynchronously operating network segment (101), to at least one transmitter unit (20) with a buffer device (21) and being buffered there, the control data (T1, T2, T3, T4) being read from the buffer device (21) and being transmitted to the at least two actuators (30, 40, 50) via a network segment (201) operating in sync with a transmission clock, **characterized in that**
the transmission clock is changed on the basis of the quantity of control data (T1, ..., T3) buffered in the buffer device (21), the actuators (30, 40, 50) processing the desired values at the same time in the correct context for jointly performing a coordinated action, as a result of which an offset between the actuators is avoided and the actuators perform their action in a synchronous manner.

2. Method according to Claim 1, the transmission clock being increased if the quantity of control data (T1, ..., T3) buffered in the buffer device (21) exceeds an upper threshold value.

3. Method according to Claim 1 or 2, the transmission clock being reduced if the quantity of control data (T1, ..., T3) buffered in the buffer device (21) falls below a lower threshold value.

4. Method according to one of the preceding claims, the transmission clock being changed in proportion to a deviation of the quantity of control data (T1, ..., T3) buffered in the buffer device (21) from the threshold value.

5. Method according to one of the preceding claims, the control data being marked before they are transmitted to the buffer device (21), the marking indicating a sequence of the control data.

6. Method according to one of the preceding claims, missing control data being determined from existing control data, in particular being extrapolated or interpolated.

7. Automation network (1) comprising
a group (200) of at least two subordinate network subscribers (20, 10, 30, 40, 50) which are connected to one another by means of a synchronously operating network segment (201), the group (200) comprising at least one transmitter unit (20) with a buffer device (2) and at least two actuators (30, 40, 50) for jointly performing a coordinated action,
at least one superordinate control unit (10) which is connected to the transmitter unit (20) by means of an asynchronously operating network segment (101) and provides control data (T1, ..., T3) which comprise desired values for the actuators (30, 40, 50),
**characterized in that**
the transmitter unit (20) is connected to the synchronously operating network segment (201) and to the asynchronously operating network segment (101) and is set up to receive the control data (T1, ..., T3) for the actuators (30, 40, 50) via the asynchronously operating network segment (101), to buffer said data in the buffer device (21), to read the control data (T1, ..., T3) buffered in the buffer device (21), to transmit said data to the actuators (30, 40, 50) in a synchronous manner via the network segment (201) operating in sync with a transmission clock, and to change the transmission clock on the basis of the quantity of control data (T1, ..., T3) buffered in the buffer device (21),
the actuators (30, 40, 50) being set up to process the desired values at the same time in the correct context for jointly performing a coordinated action, as a result of which an offset between the actuators is avoided and the actuators perform their action in a synchronous manner.

8. Automation network according to Claim 7, the superordinate control unit (10) and/or the subordinate network subscribers (20, 30, 40, 50) being in the form of electrical controllers, PLCs, drive regulators and/or I/O devices.

## Revendications

1. Procédé de commande synchrone d'au moins deux actionneurs (30, 40, 50) en vue de l'exécution commune d'une action coordonnée par une unité de commande (10) de niveau supérieur par le biais d'un segment de réseau (101) à fonctionnement asynchrone, les au moins deux actionneurs (30, 40, 50) et l'unité de commande (10) de niveau supérieur étant inclus dans un réseau d'automatisation (1) et des données de commande (T1, T2, T3, T4) qui comprennent des valeurs de consigne pour les actionneurs (30, 40, 50) étant délivrées par l'unité de commande (10) pour les au moins deux actionneurs (30, 40, 50), les données de commande (T1, T2, T3, T4) étant transmises par le biais du segment de réseau (101) à fonctionnement asynchrone à au moins une unité à transmetteur (20) pourvue d'un dispositif de mémorisation temporaire (21) et y étant mémorisées temporairement, les données de commande (T1, T2, T3, T4) étant lues depuis le dispositif de mémorisation temporaire (21) et transmises par le biais d'un segment de réseau (201) à fonctionnement synchrone avec un rythme de transmission aux au moins deux actionneurs (30, 40, 50), **caractérisé en ce que** le rythme de transmission est modifié en fonction de la quantité de données de commande (T1, ..., T3) mémorisées temporairement dans le dispositif de mémorisation temporaire (21), les actionneurs (30, 40, 50) traitant les valeurs de consigne de manière contextuelle au même moment pour l'exécution commune d'une action coordonnée, ce qui a pour effet d'éviter un décalage entre les actionneurs et que les actionneurs exécutent leur action de manière synchrone.

2. Procédé selon la revendication 1, le rythme de transmission étant augmenté lorsque la quantité de données de commande (T1, ..., T3) mémorisées temporairement dans le dispositif de mémorisation temporaire (21) dépasse une valeur de seuil haute.

3. Procédé selon la revendication 1 ou 2, le rythme de transmission étant réduit lorsque la quantité de données de commande (T1, ..., T3) mémorisées temporairement dans le dispositif de mémorisation temporaire (21) devient inférieure à une valeur de seuil basse.

4. Procédé selon l'une des revendications précédentes, le rythme de transmission étant modifié proportionnellement à un écart entre la quantité de données de commande (T1, ..., T3) mémorisées temporairement dans le dispositif de mémorisation temporaire (21) et la valeur de seuil.

5. Procédé selon l'une des revendications précédentes, les données de commande étant marquées avant qu'elles soient transmises au dispositif de mémorisation temporaire (21), le marquage identifiant une séquence de données de marquage.

6. Procédé selon l'une des revendications précédentes, les données de commande manquantes étant déterminées à partir de données de commande existantes, notamment extrapolées ou interpolées.

7. Réseau d'automatisation (1) comprenant
une interconnexion (200) composée d'au moins deux membres de réseau (20, 10, 30, 40, 50) subordonnés qui sont connectés entre eux par un segment de réseau (201) à fonctionnement synchrone, l'interconnexion (200) comprenant au moins une unité à transmetteur (20) pourvue d'un dispositif de mémorisation temporaire (2) et au moins deux actionneurs (30, 40, 50) en vue de l'exécution commune d'une action coordonnée,
au moins une unité de commande (10) de niveau supérieur qui est reliée à l'unité à transmetteur (20) par le biais d'un segment de réseau (101) à fonctionnement asynchrone et délivre des données de commande (T1, ..., T3), lesquelles comprennent des valeurs de consigne pour les actionneurs (30, 40, 50),
**caractérisé en ce que** l'unité à transmetteur (20) est connectée au segment de réseau (201) à fonctionnement synchrone et au segment de réseau (101) à fonctionnement asynchrone et est conçue pour recevoir les données de commande (T1, ..., T3) pour les actionneurs (30, 40, 50) par le biais du segment de réseau (101) à fonctionnement asynchrone, les mémoriser temporairement dans le dispositif de mémorisation temporaire (21), lire les données de commande (T1, ..., T3) mémorisées temporairement dans le dispositif de mémorisation temporaire (21), les transmettre de manière synchrone aux actionneurs (30, 40, 50) par le biais du segment de réseau (201) à fonctionnement synchrone avec un rythme de transmission, et modifier le rythme de transmission en fonction de la quantité de données de commande (T1, ..., T3) mémorisées temporairement dans le dispositif de mémorisation temporaire (21), et
les actionneurs (30, 40, 50) étant configurés pour traiter les valeurs de consigne de manière contextuelle au même moment pour l'exécution commune d'une action coordonnée, ce qui a pour effet d'éviter un décalage entre les actionneurs et que les actionneurs exécutent leur action de manière synchrone.

8. Réseau d'automatisation selon la revendication 7, l'unité de commande (10) de niveau supérieur et/ou les membres de réseau (20, 30, 40, 50) subordonnés étant réalisés sous la forme de commandes électriques, d'API, de variateurs de moteur et/ou d'appareils d'E/S.
